# EUROPÄISCHE PATENTSCHRIFT

(11) **EP 0 769 678 B1**
(45) Veröffentlichungstag und Bekanntmachung des Hinweises auf die Patenterteilung: **05.12.2001**
(21) Anmeldenummer: 96202859.3
(22) Anmeldetag: 14.10.1996
(51) Int. Cl.: G01C 21/20

(54) **Navigationssystem für ein Fahrzeug**
Navigation system for a vehicle
Système de navigation pour un véhicule

(30) Priorität: 19.10.1995 DE 19538894
(43) Veröffentlichungstag der Anmeldung: 23.04.1997
(73) Patentinhaber: Mannesmann VDO Aktiengesellschaft, 60388 Frankfurt am Main (DE)
(72) Erfinder: van Roekel, Jauke, Philips Patentverwaltung GmbH, 22335 Hamburg (DE); Hofmann, Lutz, c/o Philips Patentverwaltung GmbH, 22335 Hamburg (DE)

(56) Entgegenhaltungen:
- EP-A- 0 348 691
- CA-A- 2 145 731
- GB-A- 2 169 725
- PATENT ABSTRACTS OF JAPAN vol. 015, no. 312 (P-1236), 9.August 1991 & JP-A-03 112000 (NISSAN MOTOR CO LTD), 13.Mai 1991,

## Beschreibung

Die Erfindung bezieht sich auf ein Navigationssystem für ein Fahrzeug mit einer Navigationseinheit, in der Navigationsinformationen erzeugt werden, und mit einer Steuereinheit, der die Navigationsinformationen eingangsseitig zugeführt werden und deren Ausgangssignal als Steuerinformation die Bewegung eines Bewegungselements steuert.

Ein Navigationssystem für Kraftfahrzeuge ist in der US 4,758,959 beschrieben. Die in der Navigationseinheit erzeugten Navigationsinformationen werden dem Fahrer mittels eines Sprachgenerators und eines Lautsprechers akustisch sowie mittels eines Bildgenerators und eines Bildschirms visuell übermittelt. Die visuelle Übermittlung der Navigations-informationen hat den Nachteil, daß der Fahrer seinen Blick von der Fahrbahn abwenden muß, wodurch die Verkehrssicherheit beeinträchtigt wird. Werden die Navigationsinformationen akustisch übermittelt, so kann der Fahrer diese wahrnehmen, ohne den Blick von der Fahrbahn abzuwenden. Unterhält sich der Fahrer jedoch mit seinem Beifahrer oder mittels eines Autotelefons mit einem anderen Gesprächsteilnehmer, so kann es leicht dazu kommen, daß er die akustisch übermittelten Navigationsinformationen überhört.

Aus JP-A-03112000 ist ein Navigationssystem für Kraftfahrzeuge bekannt, welches dem Fahrer Richtungsänderungen über Vibratoren, welche am Lenkrad montiert sind, anzeigt. Je nach dem, ob der Fahrer links oder rechts abbiegen soll, vibriert entweder der auf der linken Seite des Lenkrads angebrachte Vibrator oder sein Gegenstück auf der rechten Seite.

Die Schrift GB-A-2 169 725 offenbart ein Navigationssystem mit verbesserter Orientierungsfunktion für automatisierte Fahrzeuge. Ein solches Fahrzeuge wird allein durch das Navigationssystem gesteuert, welches die Geschwindigkeit des Fahrzeugs regelt und auch die Steuerung der Lenkung übernimmt.

Auch CA-A-2 145 731 zeigt ein System, welches ein Fahrzeug ohne Mithilfe eines Fahrers steuert. Das Fahrzeug wird dabei über die Auswertung von Lichtsignalen, welche Kameras auffangen, gesteuert.

Des weiteren beschreibt die Schrift EP-A-0 348 691 ein Verfahren und eine Vorrichtung zur haptischen Anzeige der Abstandswarnung in einem Kraftfahrzeug. Wird ein bestimmter Abstand zu einem vorrausfahrenden Fahrzeug unterschritten, so erhält der Fahrer ein haptisches Signal. Dies geschieht durch Schwingungen des Lenkrads, des Fahrersitzes oder auch des gesamten Fahrzeugs.

Es ist Aufgabe der vorliegenden Erfindung, ein Navigationssystem für ein Fahrzeug zu realisieren, welches dem Fahrer Navigationsinformationen auch dann sicher übermittelt, wenn seine akustische und visuelle Aufnahmefähigkeit eingeschränkt ist.

Diese Aufgabe ist erfindungsgemäß dadurch gelöst, daß die Navigationsinformationen des Navigationssystems mittels der Steuereinheit und des Bewegungselements in Drehbewegungen eines Lenkrads umgewandelt werden.

Die in der Navigationseinheit erzeugten Navigationsinformationen werden zunächst der Steuereinheit zugeführt. In dieser Steuereinheit werden die Navigationsinformationen weiterverarbeitet und in Steuerinformationen umgewandelt, welche am Ausgang der Steuereinheit zur Verfügung stehen. Diese Steuerinformationen steuern die Bewegung des Bewegungselementes. Die Navigationsinformationen sind in der Art und Weise der Bewegung des Bewegungselementes enthalten. Ein derartiges Navigationssystem hat den Vorteil, daß der Fahrer die Navigations-informationen aufnehmen kann, ohne seinen Blick von der Fahrbahn abzuwenden.

Gleichzeitig kann er sein Gehör dafür verwenden, sich mit einem Beifahrer zu unterhalten, mittels eines etwaigen Autotelefons zu telefonieren oder mittels eines Autoradios Musik zu hören. Soll dem Fahrer z.B. mitgeteilt werden, daß er bei der nächsten Möglichkeit nach rechts abbiegen muß, so wird das Lenkrad mittels der Steuereinheit und des Bewegungselementes einen Drehimpuls nach rechts erhalten. Dieser Drehimpuls nach rechts wird von dem Fahrer, der seine Hände an dem Lenkrad hat, mittels seines Tastsinnes erkannt. Um die Verkehrssicherheit zu gewährleisten, muß der Winkel des Drehimpulses sehr klein gewählt werden. Vorteilhaft ist der Drehwinkel des Drehimpulses kleiner zu wählen als das Spiel der Lenkung, so daß der Drehimpuls die Fahrtrichtung des Fahrzeugs nicht verändert. Die Übertragung eines kurzen Drehimpuls macht Vibratoren im Lenkrad überflüssig. Auch wenn der Fahrer mit seinen Händen an beliebigen Stellen das Lenkrad angreift, wird er den Drehimpuls immer zuverlässig und richtungsrichtig spüren können. Vibratoren müssen dagegen die ganze Lenkradoberfläche bedecken, da sie den Fahrer sonst nicht unabhängig vom Angriffspunkt seiner Hände am Lenkrad benachrichtigen können. Dies ist um so problematischer, als in hochwertigen Autos heute sogenannte Multifunktionslenkräder eingebaut werden, welchen in einem bestimmten Bereich mit Tasten versehen sind. In diesem Bereich ist das Anbringen eines Vibrators nicht möglich, da hier die Tasten im Weg sind. Ein Problem ergibt sich bei den Vibratoren auch, wenn der Fahrer das Lenkrad mehr als 90° dreht, denn dann treten Probleme mit der richtungsrichtigen Mitteilung der Vibratoren an den Fahrer auf, da nun der rechte Vibrator auf die linke Seite gedreht wird und umgekehrt der linke auf die rechte Seite.

Weitere vorteilhafte Ausgestaltungen dieser Ausführungsform sind dadurch gekennzeichnet, daß die Navigationsinformationen mittels der Steuereinheit die Amplitude, die Frequenz oder die Modulation der Bewegung und/oder Vibration des Bewegungselementes steuern.

Die Steuerung von Amplitude, Frequenz und Modulation der Bewegung und/oder Vibration des Bewegungselementes ermöglicht es, dem Fahrer verschiedene Navigationsinformationen gleichzeitig mitzuteilen, z.B. Entfernungsinformationen, Winkelinformationen oder Zählinformationen.

Eine weitere vorteilhafte Ausgestaltung der Erfindung ist dadurch gekennzeichnet, daß die Navigationsinformationen, welche die Amplitude der Bewegung und/oder Vibration des Bewegungselementes steuern, Entfernungsinformationen sind. Eine mögliche Entfernungsinformation könnte z.B. die Entfernung zu einer bevorstehenden Kreuzung sein. Dabei ist es vorteilhaft, wenn die Amplitude der Bewegung und/oder Vibration des Bewegungselementes mit abnehmender Entfernung z.B. zu der Kreuzung zunimmt. Die zunehmende Amplitude zeigt dem Fahrer, daß das bevorstehende Ereignis, in diesem Falle die Kreuzung, immer näher rückt.

Eine weitere vorteilhafte Ausgestaltung der Erfindung ist dadurch gekennzeichnet, daß die Navigationsinformationen, welche die Frequenz der Bewegung und/oder Vibration des Bewegungselementes steuern, Winkelinformationen sind.

Eine Frequenz von 50 Hz könnte dem Fahrer beispielsweise mitteilen, daß er nachfolgend in einem Winkel von 90° abbiegen muß, während eine Frequenz von 25 Hz bedeutet, daß der Fahrer nachfolgend in einem Winkel von 45° abbiegen muß.

Eine weitere vorteilhafte Ausgestaltung der Erfindung ist dadurch gekennzeichnet, daß die Navigationsinformationen, welche die Modulation der Bewegung und/oder Vibration des Bewegungselementes steuern, Zählinformationen sind.

Durch die Modulation der Bewegung und Vibration des Bewegungselementes kann dem Fahrer z.B. mitgeteilt werden, bei welcher der nachfolgenden Kreuzungen er abbiegen muß. So könnten z.B. zwei Impulse von bestimmter Frequenz und Amplitude dem Fahrer mitteilen, daß das Ereignis, z.B. das Abbiegen, an der nachfolgend zweiten Kreuzung erfolgen muß, während drei Impulse bestimmter Frequenz und Amplitude ein Abbiegen an der nachfolgend dritten Kreuzung übermitteln.

Zusammenfassend läßt sich sagen, daß die Navigationsinformationen dem Fahrer immer über die Art und Weise der Bewegung und/oder Vibration des Bewegungselementes mitgeteilt werden. Welche charakteristischen Größen der Bewegung und/oder Vibration des Bewegungselementes dem Fahrer dabei welche Informationen übermittelt, kann von der individuellen Lernfähigkeit des Fahrers abhängig gemacht werden. In jedem Fall ist eine Trainingsphase erforderlich, in der der Fahrer lernen muß, welche charakteristischen Größen der Bewegung und/oder Vibration des Bewegungselementes ihm welche Navigationsinformationen mitteilen. Hat der Fahrer sich an das System gewöhnt, so wird er die Navigationsinformationen automatisch ohne Nachdenken erkennen.

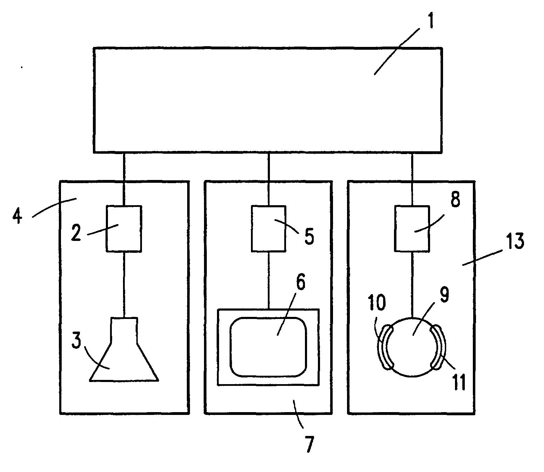

Ein Ausführungsbeispiel der Erfindung wird nachfolgend anhand der einzigen Figur der Zeichnung näher erläutert.

Die einzige Figur der Zeichnung zeigt ein Navigationssystem eines Fahrzeuges mit einer Navigationseinheit 1, in der Navigationsinformationen erzeugt werden. Diese Navigationsinformationen sind z.B. Informationen über den Standort des Fahrzeuges oder Fahrtrichtungshinweise, um ein gewünschtes Ziel zu erreichen. Diese Navigationsinformationen müssen dem Fahrer des Fahrzeugs übermittelt werden. Hierfür ist als erste Möglichkeit eine akustische Einheit 4 vorgesehen, welche dem Fahrer die Navigationsinformationen akustisch übermittelt. Die akustische Einheit 4 besteht aus einem Sprachgenerator 2, dem die Navigationsinformationen von der Navigationseinheit 1 zugeführt werden. Dieser Sprachgenerator 2 steuert einen Lautsprecher 3 an, der die Navigationsinformation in akustisch wahrnehmbare Schallwellen umwandelt. Als weitere Möglichkeit ist eine visuelle Einheit 7 vorgesehen, welche dem Fahrer die Navigationsinformationen visuell übermittelt. Die visuelle Einheit 7 weist einen Bildgenerator 5 auf, der die Navigationsinformationen von der Navigationseinheit 1 erhält. Der Bildgenerator 5 steuert einen Anzeigeschirm 6, auf dem der Fahrer des Fahrzeugs die graphisch dargestellten Navigationsinformationen ablesen kann. Als dritte Möglichkeit ist eine mechanische Einheit 13 vorgesehen, welche die Navigationsinformationen in Bewegungen umsetzt. Die mechanische Einheit 13 weist eine Steuereinheit 8 auf, der die Navigationsinformationen von der Navigationseinheit 1 zugeführt werden. Die Steuereinheit 8 steuert die Bewegung und/oder Vibration zweier Bewegungselemente 10 und 11, welche an dem Lenkrad 9 des Fahrzeugs angeordnet sind. Die Navigationsinformationen sind in der Art und Weise der Bewegung und/oder Vibration der Bewegungselemte 10 und 11 enthalten. Der Fahrer des Fahrzeugs kann die Navigationsinformationen erkennen, indem er die am Lenkrad 9 angeordneten Bewegungselemente 10 und 11 berührt und aus der Art und Weise der Bewegung und/oder Vibration der Bewegungselemente die Navigationsinformationen erkennt. Das Erkennen der Navigationsinformationen aus der Art und Weise der Bewegung und/oder Vibration der Bewegungselemente erfordert eine Trainingsphase, in der der Fahrer des Fahrzeuges den Zusammenhang zwischen der Art und Weise der Bewegung und/oder Vibration der Bewegungselemente 10 und 11 und der damit dargestellten Navigationsinformationen lernt.

Die akustische Einheit 4, die visuelle Einheit 7 und die mechanische Einheit 13 können wahlweise mittels eines nicht dargestellten Schalters jeweils einzeln oder auch gleichzeitig betrieben werden. Der Fahrer kann damit entsprechend seiner jeweiligen Fahrsituation entscheiden, auf welche Weise ihm die in der Navigationseinheit 1 erzeugten Navigationsinformationen übermittelt werden. Befindet sich der Fahrer z.B. auf einem Parkplatz und möchte sich von dem Navigationssystem die Fahrtroute zu einem gewünschten Ziel zeigen lassen, so wird er vorteilhaft die visuelle Einheit 7 anwählen. Wenn sich der Fahrer während der Fahrt von dem Navigationssystem zu einem bestimmten Zielort hinführen lassen will, er sich nicht mit einem eventuellen Beifahrer unterhalten möchte und auch keine Musik hören möchte, so wird er vorzugsweise die akustische Einheit 4 anwählen. Will der Fahrer sich jedoch während der Fahrt zu einem Zielort mit einem Beifahrer unterhalten oder Musik hören, so wird er die mechanische Einheit 13 anwählen. Er kann sich dann ungestört mit seinem Beifahrer unterhalten oder Musik hören, ohne durch akustische Signale des Navigationssystems gestört zu werden. Auch braucht er seinen Blick nicht von der Fahrbahn abzuwenden, um die auf dem Anzeigeschirm 6 der visuellen Einheit 7 dargestellten Navigationsinformation abzulesen.

Als mögliche charakteristische Kenngrößen der Art und Weise der Bewegung und/oder Vibration der Bewegungselemente 10 und 11, an denen der Fahrer die Navigationsinformationen erkennen kann, sind z.B. die Amplitude, die Frequenz und die Modulation der Bewegung und/oder Vibration der Bewegungselemente 10 und 11 denkbar. Hierbei eignet sich die Amplitude der Bewegung und/oder Vibration der Bewegungselemente 10 und 11 insbesondere für eine Entfernungsangabe. So könnte z.B. eine Amplitude von -20 dB bedeuten, daß ein Ereignis, z.B. eine bevorstehende Kreuzung, noch 100 m entfernt ist, während eine Amplitude von -15 dB eine Entfernung von 50 m und eine Amplitude von -10 dB eine Entfernung von 5 m bedeutet. Die Frequenz der Bewegung und/oder Modulation der Bewegungselemente 10 und 11 kann vorteilhaft für eine Winkelangabe verwendet werden. So könnte z.B. eine Frequenz von 50 Hz bedeuten, daß man nachfolgend in einem Winkel von 90° abbiegen muß, während eine Frequenz von 25 Hz ein Abbiegen in einem Winkel von 45° bedeutet. Die Modulation der Bewegung und/oder Vibration der Bewegungselemente 10 und 11 kann vorteilhaft für eine Zählinformation eingesetzt werden. So könnten z.B. zwei Impulse bestimmter Amplitude und Frequenz bedeuten, daß der Fahrer an der nachfolgend zweiten Kreuzung abbiegen muß, während drei Impulse angeben, daß er bei der nachfolgend dritten Kreuzung abbiegen muß.

## Patentansprüche

1. Navigationssystem für ein Fahrzeug mit einer Navigationseinheit (1), in der Navigationsinformationen erzeugt werden, und mit einer Steuereinheit (8), der die Navigationsinformationen eingangsseitig zugeführt werden und deren Ausgangssignal als Steuerinformation die Bewegung eines Bewegungselements steuert,
**dadurch gekennzeichnet,**
**dass** die Navigationsinformationen des Navigationssystems mittels der Steuereinheit (8) und des Bewegungselements in Drehbewegungen eines Lenkrads (9) umgewandelt werden.

2. Navigationssystem nach Anspruch 1, **dadurch gekennzeichnet,**
**daß** das Bewegungselement (10,11) an einem Lenkrad (9) angeordnet ist.

3. Navigationssystem nach Anspruch 2, **dadurch gekennzeichnet,**
**daß** am Lenkrad (9) zwei Bewegungselemente (10, 11) angeordnet sind, eines auf der linken Seite des Lenkrades und eines auf der rechten Seite des Lenkrades (9).

4. Navigationssystem nach Anspruch 2 oder 3, **dadurch gekennzeichnet,**
**daß** die Navigationsinformationen mittels der Steuereinheit (8) die Amplitude der Bewegung und/oder Vibration der Bewegungselemente (10,11) steuern.

5. Navigationssystem nach Anspruch 2 oder 3, **dadurch gekennzeichnet,**
**daß** die Navigationsinformationen mittels der Steuereinheit (8) die Frequenz der Bewegung und/oder Vibration der Bewegungselemente (10,11) steuern.

6. Navigationssystem nach Anspruch 2 oder 3, **dadurch gekennzeichnet,**
**daß** die Navigationsinformation mittels der Steuereinheit (8) die Modulation der Bewegung und/oder Vibration der Bewegungselemente (10,11) steuern.

7. Navigationssystem nach Anspruch 4, **dadurch gekennzeichnet,**
**daß** die Navigationsinformationen, welche die Amplitude der Bewegung und/oder Vibration der Bewegungselemente (10,11) steuern, Entfernungsinformationen sind.

8. Navigationssystem nach Anspruch 5, **dadurch gekennzeichnet,**
**daß** die Navigationsinformationen, welche die Frequenz der Bewegung und/oder Vibration der Bewegungselemente (10,11) steuern, Winkelinformationen sind.

9. Navigationssystem nach Anspruch 6, **dadurch gekennzeichnet,**
**daß** die Navigationsinformationen, welche die Modulation der Bewegung und/oder Vibration der Bewegungselemente (10,11) steuern, Zählinformationen sind.

## Claims

1. Navigation system for a vehicle having a navigation unit (1) in which navigation information is generated and having a control unit (8) to which the navigation information is fed at the input end and whose output signal controls, as control information, the movement of a movement element, **characterized in that** the navigation information of the navigation system is converted into rotary movements of a steering wheel (9) by means of the control unit (8) and the movement element.

2. Navigation system according to Claim 1, **characterized in that** the movement element (10,11) is arranged on a steering wheel (9).

3. Navigation system according to Claim 2, **characterized in that** two movement elements (10,11) are arranged on the steering wheel (9), one on the left hand side of the steering wheel and one on the right hand side of the steering wheel (9).

4. Navigation system according to Claim 2 or 3, **characterized in that** the navigation information controls the amplitude of the movement and/or vibration of the movement elements (10,11) by means of the control unit (8).

5. Navigation system according to Claim 2 or 3, **characterized in that** the navigation information controls the frequency of the movement and/or vibration of the movement elements (10,11) by means of the control unit (8).

6. Navigation system according to Claim 2 or 3, **characterized in that** the navigation information controls the modulation of the movement and/or vibration of the movement elements (10,11) by means of the control unit (8).

7. Navigation system according to Claim 4, **characterized in that** the navigation information which controls the amplitude of the movement and/or vibration of the movement elements (10,11) is distance information.

8. Navigation system according to Claim 5, **characterized in that** the navigation information which controls the frequency of the movement and/or vibration of the movement elements (10,11) is angular information.

9. Navigation system according to Claim 6, **characterized in that** the navigation information which controls the modulation of the movement and/or vibration of the movement elements (10,11) is counting information.

## Revendications

1. Système de navigation pour un véhicule, avec une unité de navigation (1) dans laquelle des informations de navigation sont créées, et avec une unité de commande (8) à l'entrée de laquelle les informations de navigation sont amenées et dont le signal de sortie commande le déplacement d'un élément de déplacement à titre d'information de commande, **caractérisé en ce que** les informations de navigation du système de navigation sont converties en déplacements de rotation d'un volant (9) au moyen de l'unité de commande (8) et de l'élément de déplacement.

2. Système de navigation selon la revendication 1, **caractérisé en ce que** l'élément de déplacement (10, 11) est disposé sur un volant (9).

3. Système de navigation selon la revendication 2, **caractérisé en ce que** deux éléments de déplacement (10, 11) sont disposés sur le volant (9), l'un du côté gauche du volant et l'autre du côté droit du volant (9).

4. Système de navigation selon la revendication 2 ou 3, **caractérisé en ce que** les informations de navigation commandent au moyen de l'unité de commande (8) l'amplitude des déplacements et/ou de la vibration des éléments de déplacement (10, 11).

5. Système de navigation selon la revendication 2 ou 3, **caractérisé en ce que** les informations de navigation commandent au moyen de l'unité de commande (8) la fréquence des déplacements et/ou de la vibration des éléments de déplacement (10, 11).

6. Système de navigation selon la revendication 2 ou 3, **caractérisé en ce que** les informations de navigation commandent au moyen de l'unité de commande (8) la modulation du déplacement et/ou de la vibration des éléments de déplacement (10, 11).

7. Système de navigation selon la revendication 4, **caractérisé en ce que** les informations de navigation qui commandent l'amplitude des déplacements et/ou de la vibration des éléments de déplacement (10, 11) sont des informations de distance.

8. Système de navigation selon la revendication 5, **caractérisé en ce que** les informations de navigation qui commandent la fréquence des déplacements et/ou de la vibration des éléments de déplacement (10, 11) sont des informations d'angle.

9. Système de navigation selon la revendication 6, **caractérisé en ce que** les informations de navigation qui commandent la modulation du déplacement et/ou de la vibration des éléments de déplacement (10, 11) sont des informations de comptage.
